(19) **Europäisches Patentamt European Patent Office Office européen des brevets**

(11) **EP 4 549 301 A1**

(12) **EUROPEAN PATENT APPLICATION**
published in accordance with Art. 153(4) EPC

(43) Date of publication:
07.05.2025 Bulletin 2025/19

(21) Application number: 23831118.7

(22) Date of filing: 15.06.2023

(51) International Patent Classification (IPC):
*B62L 3/08* (2006.01)    *B60T 8/00* (2006.01)
*B60T 8/26* (2006.01)

(52) Cooperative Patent Classification (CPC):
**B60T 8/00; B60T 8/26; B62L 3/08**

(86) International application number:
**PCT/JP2023/022204**

(87) International publication number:
**WO 2024/004670 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.06.2022 JP 2022103932

(71) Applicant: **Hitachi Astemo, Ltd.
Ibaraki 312-8503 (JP)**

(72) Inventors:
• **YAMAOKA, Takumi
Hitachinaka-shi, Ibaraki 312-8503 (JP)**
• **TSUDA, Fumiya
Hitachinaka-shi, Ibaraki 312-8503 (JP)**

(74) Representative: **Plougmann Vingtoft a/s
Strandvejen 70
2900 Hellerup (DK)**

(54) **VEHICLE BRAKE CONTROL DEVICE AND BRAKE CONTROL METHOD**

(57)     A vehicle brake control device C includes a first brake operating member connected to a first brake, a second brake configured not to be operated by the first brake operating member, a second brake operating member connected to the second brake, and a controller configured to execute braking force control of controlling a braking force of the first brake based on an operation on the second brake operating member. In the braking force control, the controller executes pressure increase control of controlling the braking force of the first brake based on the operation on the second brake operating member (S3 to S6), release determination of determining whether the second brake operating member is loosened during the pressure increase control (S6, S7), and pressure reduction control of gradually reducing the braking force of the first brake when it is determined in the release determination that the second brake operating member is loosened (S8 to S15).

FIG.2

```
START
S1  DETECT OPERATION ANGLE θ
S2  θ ≥ θ s?
    θ s: START THRESHOLD
    No / Yes
S3  CALCULATE COMMAND CURRENT
    VALUE An BASED ON θ AND
    VEHICLE BODY DECELERATION
S4  An=min(An,An-1+Au)
    Au: UPPER LIMIT
S5  θ ≤ θ th1?   No / Yes
S6  DOES θ CONTINUE TO
    DECREASE FOR FIRST
    PREDETERMINED TIME T1?   No / Yes
S7  F=1
    F: RELEASE FLAG
S8  An≥Ath?
    An: COMMAND CURRENT VALUE
    Ath: THRESHOLD   Yes / No
S9  D=D1
    D: PRESSURE REDUCTION AMOUNT
    D1: FIRST PRESSURE
    REDUCTION AMOUNT
S10 D=D2
    D2: SECOND PRESSURE
    REDUCTION AMOUNT
    (D2<D1)
S11 An=An-1−D
S12 DOES θ INCREASE
    CONTINUOUSLY FOR SECOND
    PREDETERMINED TIME T2?   Yes / No
S16 F=0
S13 θ ≤ θ th2?   No / Yes
S14 F=0
S15 An=0
END
```

EP 4 549 301 A1

## Description

Technical Field

The present invention relates to a vehicle brake control device and a brake control method, and more particularly to a vehicle brake control device and a brake control method for a two-wheeled vehicle.

Background Art

In the related art, as a vehicle brake control device, a device has been known in which a hydraulic brake system is provided for a front wheel brake, a mechanical brake is provided for a rear wheel brake, and a hydraulic pressure of the brake system on the front side is controlled in accordance with an operation on a rear brake operating member connected to the rear wheel brake (see WO2020/026678).

Summary of Invention

However, when the rear brake operating member is loosened during hydraulic pressure control of the brake system in accordance with the operation on the rear brake operating member, if the hydraulic pressure of the brake system is suddenly reduced, a feeling of discomfort may be brought to a rider.

Therefore, an object of the invention is to provide a configuration including a first brake that can be operated by a first brake operating member and a second brake operating member, and a second brake that cannot be operated by the first brake operating member. With the configuration, a feeling of discomfort brought to the rider when releasing the second brake operating member is reduced.

In order to solve the above problem, the invention provides a vehicle brake control device including: a first brake operating member connected to a first brake; a second brake configured not to be operated by the first brake operating member; a second brake operating member connected to the second brake; and a controller configured to execute braking force control of controlling a braking force of the first brake based on an operation on the second brake operating member.

In the braking force control, the controller executes pressure increase control of controlling the braking force of the first brake based on the operation on the second brake operating member, release determination of determining whether the second brake operating member is loosened during the pressure increase control, and pressure reduction control of gradually reducing the braking force of the first brake when it is determined in the release determination that the second brake operating member is loosened.

Further, the invention provides a brake control method to be executed by a vehicle brake control device, the device including a first brake operating member connected to a first brake, a second brake configured not to be operated by the first brake operating member, a second brake operating member connected to the second brake, and a controller configured to execute braking force control of controlling a braking force of the first brake based on an operation on the second brake operating member. In the brake control method, the controller executes a pressure increase step of controlling the braking force of the first brake based on the operation on the second brake operating member, a release determination step of determining whether the second brake operating member is loosened during the pressure increase step, and a pressure reduction step of gradually reducing the braking force of the first brake when it is determined in the release determination step that the second brake operating member is loosened.

According to the configurations, since the braking force of the first brake is gradually reduced when the second brake operating member is loosened, it is possible to reduce a feeling of discomfort brought to a rider when the second brake operating member is released.

The vehicle brake control device may further include a hydraulic pressure unit configured to generate the braking force of the first brake by applying a hydraulic pressure to the first brake, the hydraulic pressure unit including a pressure regulator configured to change the hydraulic pressure applied to the first brake according to a command current value. The controller may execute the pressure reduction control by controlling the pressure regulator.

The controller may execute the pressure increase control by controlling the pressure regulator, set a first pressure reduction amount in a case where a command current value for the pressure regulator adopted when it is determined that the second brake operating member is loosened is equal to or greater than a threshold, and set, as a current value of the command current value, a value obtained by subtracting the first pressure reduction amount from a previous value of the command current value during the pressure reduction control.

According to the configuration, since the pressure reduction control is executed with the pressure reduction amount corresponding to the command current value adopted when the second brake operating member is loosened, an operation feeling can be improved.

The controller may set a second pressure reduction amount smaller than the first pressure reduction amount in a case where the command current value for the pressure regulator adopted when it is determined that the second brake operating member is loosened is less than the threshold, and set, as a current value of the command current value, a value obtained by subtracting the second pressure reduction amount from a previous value of the command current value during the pressure reduction control.

According to the configuration, since the pressure reduction control is executed with the pressure reduction amount corresponding to the command current value adopted when the second brake operating member is loosened, it is possible to reduce the feeling of discomfort brought to the rider.

The controller may execute the pressure increase control by controlling the pressure regulator, end the braking force control when an operation amount of the second brake operating member is equal to or less than a predetermined value during execution of the braking force control, and based on the command current value and the operation amount occurring when it is determined that the second brake operating member is loosened, gradually reduce the command current value in accordance with a decrease in the operation amount such that the command current value is 0 when the operation amount of the second brake operating member is the predetermined value.

According to the configuration, it is possible to further restrict the command current value from suddenly becoming 0 at the end of the braking force control, and thus it is possible to further reduce the feeling of discomfort brought to the rider.

When an operation amount of the second brake operating member is increased during the pressure reduction control, the controller may resume the pressure increase control, and limit an increase in the braking force such that an amount of increase in the braking force per unit time is equal to or less than an upper limit.

According to the configuration, since a sudden increase in the braking force of the first brake when the second brake operating member is re-input is restricted, it is possible to stabilize a vehicle body behavior.

Brief Description of Drawings

[FIG. 1] FIG. 1 is a diagram illustrating a configuration of a motorcycle including a vehicle brake control device according to an embodiment.
[FIG. 2] FIG. 2 is a flowchart illustrating an operation of a controller.
[FIG. 3] FIG. 3 is a time chart illustrating a specific example of an operation of the controller.
[FIG. 4] FIG. 4 is a flowchart illustrating an operation of the controller according to a modification.
[FIG. 5] FIG. 5 is a graph illustrating a method of setting a command current value by the controller according to a modification.

Description of Embodiments

Hereinafter, an embodiment will be described in detail with reference to the drawings as appropriate.

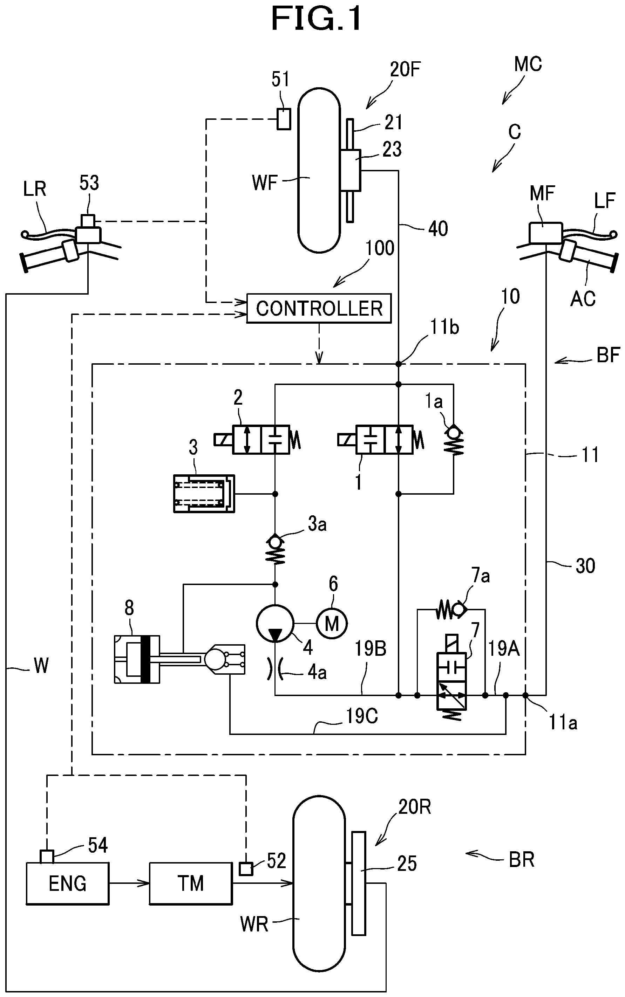

As illustrated in FIG. 1, a motorcycle MC includes an engine ENG, a transmission TM, and a vehicle brake control device C.

The engine ENG is a driving source that applies a driving force to a rear wheel WR, and is coupled to the rear wheel WR via the transmission TM. That is, in the motorcycle MC of the embodiment, the rear wheel WR is a driving wheel and a front wheel WF is a driven wheel. The engine ENG is provided with a throttle sensor 54 that detects an opening degree of a throttle valve of the engine ENG. The opening degree of the throttle valve increases as an operation amount of an accelerator AC increases. The transmission TM is a mechanism that changes output of the driving force of the engine ENG and transmits the driving force to the rear wheel WR. A speed detection sensor 52 is provided near an output shaft of the transmission TM.

The speed detection sensor 52 is a sensor (so-called speedometer sensor) that detects a wheel speed of the rear wheel WR, and detects a wheel speed corresponding to a speed displayed by a speedometer (not shown). The speed detection sensor 52 has a different detection mode from a wheel speed sensor 51 that detects a wheel speed of the front wheel WF. The wheel speed sensor 51 is a sensor that generates a pulse wave as the wheel rotates.

The vehicle brake control device C includes a brake system BF of the front wheel WF, a brake system BR of the rear wheel WR, and a controller 100.

The brake system BF mainly includes a front brake lever LF as an example of a first brake operating member, a master cylinder MF, a hydraulic pressure unit 10, a front brake 20F as an example of a first brake, a pipe 30 connecting the master cylinder MF and an input port 11a of the hydraulic pressure unit 10, and a pipe 40 connecting an output port 11b of the hydraulic pressure unit 10 and the front brake 20F.

The front brake lever LF is an operating lever for operating the front brake 20F, is disposed on the right side of a handlebar of the motorcycle MC, and can be operated by a rider's right hand. The front brake lever LF is connected to the front brake 20F via the master cylinder MF, the pipe 30, the hydraulic pressure unit 10, and the pipe 40.

The master cylinder MF is a device that outputs a hydraulic pressure corresponding to the operation amount of the front brake lever LF.

The front brake 20F is a brake that brakes the front wheel WF. The front brake 20F mainly includes a brake rotor 21, a brake pad (not shown), and a wheel cylinder 23 that generates a brake force (braking force) by pushing the brake pad against the brake rotor 21 by a hydraulic pressure output from the master cylinder MF.

The hydraulic pressure unit 10 is a unit that generates a braking force of the front brake 20F by applying a hydraulic pressure to the front brake 20F. The hydraulic pressure unit 10 is implemented by disposing various solenoid valves and the like on a pump body 11 that is a base body having a fluid line (a hydraulic pressure line) through which a brake fluid flows. In a normal state, a continuous fluid line runs from the input port 11a to the output port 11b of the pump body 11, so that the hydraulic pressure output from the master cylinder MF is transmitted to the front brake 20F.

On a hydraulic pressure line connecting the input port 11a and the output port 11b, a pressure regulator 7 is provided that changes the hydraulic pressure applied to the front brake 20F in accordance with a command current value output from the controller 100. The pressure regulator 7 is a normally open proportional solenoid valve, and is capable of adjusting a difference between a hydraulic pressure upstream and a hydraulic pressure downstream in accordance with the command current value. Specifically, the pressure regulator 7 increases the difference between the hydraulic pressure upstream and the hydraulic pressure downstream of the pressure regulator 7 as the magnitude of the command current value increases. At the pressure regulator 7, a check valve 7a is provided in parallel thereto that allows only a flow to an output port 11b side.

An inlet valve 1, which is a normally open solenoid valve, is disposed on a hydraulic pressure line between the pressure regulator 7 and the output port 11b. At the inlet valve 1, a check valve 1a is provided in parallel thereto that allows only a flow to a pressure regulator 7 side.

A reflux hydraulic pressure line 19B connected to a hydraulic pressure line between the pressure regulator 7 and the inlet valve 1 is provided from a hydraulic pressure line between the output port 11b and the inlet valve 1 via an outlet valve 2 formed of a normally closed solenoid valve.

A reservoir 3 for temporarily absorbing a surplus brake fluid, a check valve 3a, a pump 4, and an orifice 4a are arranged in this order from an outlet valve 2 side on the reflux hydraulic pressure line 19B. The check valve 3a is disposed so as to allow only a flow to the hydraulic pressure line between the pressure regulator 7 and the inlet valve 1. The pump 4 is driven by a motor 6, and is provided to generate a pressure toward the hydraulic pressure line between the pressure regulator 7 and the inlet valve 1. The orifice 4a attenuates pulsation of the pressure of the brake fluid discharged from the pump 4 and pulsation generated by operation of the pressure regulator 7.

An introduction hydraulic pressure line 19A, which connects the input port 11a and the pressure regulator 7, and a portion between the check valve 3a and the pump 4 in the reflux hydraulic pressure line 19B are connected by a suction hydraulic pressure line 19C. A mechanical suction valve 8 is provided in the suction hydraulic pressure line 19C.

The suction valve 8 switches between a state of opening the suction hydraulic pressure line 19C and a state of blocking the suction hydraulic pressure line 19C. The suction valve 8 is normally closed, and is opened based on a difference between a hydraulic pressure of a hydraulic fluid on a master cylinder MF side and a hydraulic pressure of a hydraulic fluid on a suction port side of the pump 4 which is a vacuum pressure in operation of the pump 4.

In the hydraulic pressure unit 10 configured as described above, in a normal state, each solenoid valve is not energized, and the brake hydraulic pressure introduced from the input port 11a is output to the output port 11b through the pressure regulator 7 and the inlet valve 1, and is applied to the front brake 20F as it is. When reducing an excessive brake hydraulic pressure of the front brake 20F, for example, when performing anti-locking braking control, the inlet valve 1 is closed and the outlet valve 2 is opened to allow the brake fluid to flow to the reservoir 3 through the reflux hydraulic pressure line 19B, so that the brake fluid of the front brake 20F can be drained. For example, in a case of increasing the hydraulic pressure of the front brake 20F when the front brake lever LF is not operated by the rider, the suction valve 8 is opened by driving the motor 6, and the brake fluid can be actively supplied to the front brake 20F by an increased pressure of the pump 4. Further, when it is desired to adjust the degree of the pressure increase of the front brake 20F, the adjustment can be performed by adjusting a current flowing through the pressure regulator 7.

The brake system BR mainly includes a rear brake lever LR as an example of a second brake operating member, an angle sensor 53, a rear brake 20R as an example of a second brake, and a wire W connecting the rear brake lever LR and the rear brake 20R.

The rear brake lever LR is an operating lever for operating the rear brake 20R, is disposed on the left side of the handlebar of the motorcycle MC, and can be operated by the rider's left hand. The rear brake lever LR is connected to the rear brake 20R via the wire W.

The angle sensor 53 is a sensor configured to detect an operation angle of the rear brake lever LR.

The rear brake 20R is a brake that brakes the rear wheel WR, and is a mechanical brake that operates when a force generated at the time the rear brake lever LR is gripped is transmitted via the wire W. The rear brake 20R cannot be operated by the front brake lever LF. The rear brake 20R is, for example, a drum brake, and includes a drum 25, a brake shoe (not shown), and a return spring (not shown) .

The drum 25 is rotatable integrally with the rear wheel WR. The brake shoe is rotatable between a contact position where the brake shoe comes into contact with an inner peripheral surface of the drum 25 and a separation position where the brake shoe is separated from the inner peripheral surface of the drum 25. The return spring biases the brake shoe from the contact position to the separation position. When the rider grips the rear brake lever LR, the wire W is pulled by the rear brake lever LR, whereby the brake shoe rotates from the separation position toward the contact position against a biasing force of the return spring.

The controller 100 includes, for example, a central processing unit (CPU), a random access memory (RAM), a read only memory (ROM), and an input and output circuit. The controller 100 controls the hydraulic pressure unit 10 by performing various types of calculation processing based on inputs from the wheel speed sensor 51, the speed detection sensor 52, the angle sensor 53, and the throttle sensor 54, and programs, data, and the like stored in the ROM.

The controller 100 can execute braking force control of controlling the braking force of the front brake 20F based on an operation amount of the rear brake lever LR. The controller 100 acquires, as the operation amount, an operation angle $\theta$ of the rear brake lever LR detected by the angle sensor 53. The controller 100 starts the braking force control when the operation angle $\theta$ is equal to or greater than a start threshold $\theta$s. The controller 100 ends the braking force control when the operation angle $\theta$ is equal to or less than a second predetermined value $\theta$th2 as an example of a predetermined value during execution of the braking force control.

During the braking force control, the controller 100 executes pressure increase control, release determination, and pressure reduction control. In other words, a brake control method by the controller 100 includes a pressure increase step of executing the pressure increase control, a release determination step of performing the release determination, and a pressure reduction step of executing the pressure reduction control.

The pressure increase control is control of bringing the hydraulic pressure of the front brake 20F into an increased state than when the controller 100 does not control the hydraulic pressure unit 10. During the pressure increase control, the controller 100 controls the braking force (hydraulic pressure) of the front brake 20F based on the operation on the rear brake lever LR.

Specifically, the controller 100 drives the motor 6 and controls the pressure regulator 7 to execute the pressure increase control. The controller 100 calculates the command current value to be output to the pressure regulator 7 based on the operation angle $\theta$ and a vehicle body deceleration. Here, the vehicle body deceleration can be calculated based on, for example, the wheel speed acquired from the wheel speed sensor 51. The controller 100 increases the command current value as the operation angle $\theta$ increases, and increases the command current value as the magnitude of the vehicle body deceleration decreases.

In the pressure increase control, the controller 100 limits an increase in the braking force such that the amount of increase in the braking force (hydraulic pressure) of the front brake 20F per unit time is equal to or less than an upper limit. Specifically, for example, the controller 100 limits the increase in the braking force of the front brake 20F by calculating the command current value using the following equation (1).

$$A_n = \min(A_n, \ A_{n-1} + Au) \quad (1)$$

$A_n$: a current value of the command current value

$A_{n-1}$: a previous value of the command current value
$Au$: the upper limit (fixed value)

That is, the controller 100 compares the current value $A_n$ of the command current value with a value obtained by adding the upper limit $Au$ to the previous value $A_{n-1}$ of the command current value, and determines the smaller value as the current value $A_n$ of the command current value.

The release determination is processing of determining whether the rear brake lever LR is loosened during the pressure increase control. The controller 100 starts the release determination when the operation angle $\theta$ of the rear brake lever LR is equal to or less than a first predetermined value $\theta$th1. When the operation angle $\theta$ decreases from the first predetermined value $\theta$th1 during the release determination, the controller 100 determines that the rear brake lever LR is loosened. Specifically, when the operation angle $\theta$ continuously decreases for a first predetermined time T1 during the release determination, the controller 100 determines that the rear brake lever LR is loosened.

The determination as to whether the operation angle $\theta$ continuously decreases for the first predetermined time T1 may be made by, for example, adopting a method of performing a control loop of the pressure increase control a plurality of times, and determining that the operation angle $\theta$ continuously decreases for the first predetermined time T1 when a current value of the operation angle $\theta$ is smaller than previous values in all the plurality of control loops. Specifically, for example, it is sufficient to start time measurement by a timer when the operation angle $\theta$ is equal to or less than the first predetermined value $\theta$th1, and to determine whether the current value of the operation angle $\theta$ is smaller than the previous values in all of the plurality of control cycles executed until the timer reaches the first predetermined time T1. The timer may be reset when the measured time is equal to or longer than the first predetermined time T1.

As another determination method, for example, a method of referring to a history of a plurality of operation angles $\theta$ spanning a period of the first predetermined time T1 backward from the start of the release determination and determining that the operation angle $\theta$ continuously decreases for the first predetermined time T1 based on the history of the operation angle $\theta$ is exemplified. In this method, it is not necessary to use a timer.

When it is determined that the rear brake lever LR is loosened, the controller 100 sets a release flag F indicating that the rear brake lever LR is loosened, and executes the pressure reduction control with the release flag F being set.

The pressure reduction control is control of gradually reducing the braking force of the front brake 20F when it is determined that the rear brake lever LR is loosened in the release determination. Here, "gradually reducing the braking force of the front brake 20F" means reducing the braking force of the front brake 20F at a gradient lower than a gradient adopted when reducing the braking force at the highest speed.

The controller 100 controls the pressure regulator 7 with the motor 6 stopped to execute the pressure reduction control. In a case where the command current value $A_n$ for the pressure regulator 7 adopted when it is determined that the rear brake lever LR is loosened is equal to or greater than a threshold Ath, the controller 100 sets a first pressure reduction amount D1. In the following description, the "command current value $A_n$ adopted when it is determined that the rear brake lever LR is loosened" is also simply referred to as a "command current value $A_n$ at the time of release determination".

When the command current value $A_n$ at the time of release determination is less than the threshold Ath, the controller 100 sets a second pressure reduction amount D2 smaller than the first pressure reduction amount D1. During the pressure reduction control, the controller 100 sets, as the current value $A_n$ of the command current value, a value obtained by subtracting a set pressure reduction amount D (the first pressure reduction amount D1 or the second pressure reduction amount D2) from the previous value $A_{n-1}$ of the command current value.

During the pressure reduction control, that is, in a state of the release flag F being set, if the operation angle θ is equal to or less than the second predetermined value θth2 smaller than the first predetermined value θth1, the controller 100 removes the release flag F and ends the pressure reduction control (braking force control). When the operation angle θ increases during the pressure reduction control, that is, in the state of the release flag F being set, the controller 100 removes the release flag **F,** ends the pressure reduction control, and resumes the pressure increase control. In the embodiment, when the operation angle θ continuously increases for a second predetermined time T2 with the release flag F being set, the controller 100 removes the release flag F.

The determination as to whether the operation angle θ continuously increases for the second predetermined time T2 may be made by, for example, adopting a method of performing a control loop of the pressure reduction control a plurality of times, and determining that the operation angle θ continuously decreases for the second predetermined time T2 when a current value of the operation angle θ is larger than previous values in all of the plurality of control loops. The second predetermined time T2 may be a value equal to or different from that of the first predetermined time T1.

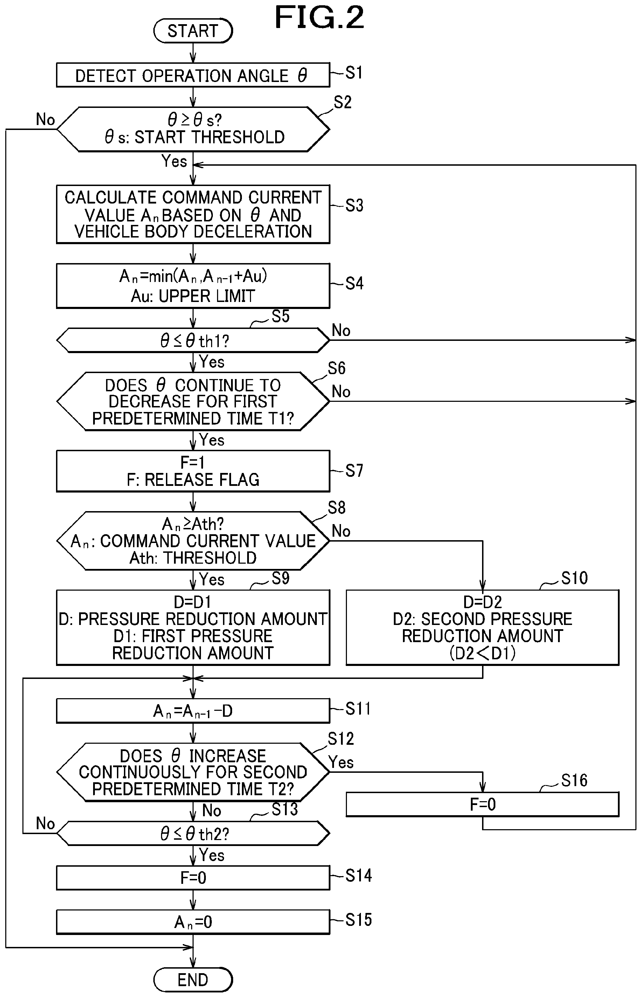

Next, the operation of the controller 100 will be described in detail. The controller 100 repeatedly executes the processing shown in FIG. 2 at all times.

In the processing of FIG. 2, the controller 100 first starts acquiring the operation angle θ of the rear brake lever LR from the angle sensor 53 (S1). After step S1, the controller 100 determines whether the operation angle θ is equal to or greater than the start threshold θs (S2). When it is determined in step S2 that θ < θs (No), the controller 100 ends the processing.

When it is determined in step S2 that θ ≥ θs (Yes), the controller 100 starts the pressure increase control (S3 to S6). In the pressure increase control, the controller 100 calculates the command current value $A_n$ based on the operation angle θ and the vehicle body deceleration (S3). After step S3, the controller 100 compares the command current value $A_n$ calculated in step S3 with a value obtained by adding the upper limit Au to the previous value $A_{n-1}$ of the command current value, and sets the smaller value as the current value $A_n$ of the command current value (S4).

In the pressure increase control, the controller 100 outputs the command current value to the pressure regulator 7 and drives the motor 6, and a timing to start driving the motor 6 may be set to an appropriate timing.

After step S4, the controller 100 determines whether the operation angle θ is equal to or less than the first predetermined value θth1 (S5). When it is determined in step S5 that θ ≤ θth1 (Yes), the controller 100 performs the release determination (S6, S7).

In the release determination, the controller 100 determines whether the operation angle θ continuously decreases for the first predetermined time T1 (S6). When it is determined in step S6 that the operation angle θ continuously decreases for the first predetermined time T1 (Yes), the controller 100 determines that the rear brake lever LR is loosened, and sets the release flag F, that is, sets F = 1 (S7).

When it is determined to be No in step S5 or step S6, the controller 100 returns to the processing of step S3. After step S7, the controller 100 executes the pressure reduction control (S8 to S15). When starting the pressure reduction control, the controller 100 stops the motor 6, and a timing of stopping the motor 6 may be set to an appropriate timing.

In the pressure reduction control, the controller 100 determines whether the command current value $A_n$ at the time of release determination is equal to or greater than the threshold Ath (S8). When it is determined in step S8 that $A_n$ ≥ Ath (Yes), the controller 100 sets the first pressure reduction amount D1 as the pressure reduction amount D (S9). When it is determined in step S8 that $A_n$ < Ath (No), the controller 100 sets the second pressure reduction amount D2 smaller than the first pressure reduction amount D1 as the pressure reduction amount D (S10).

After step S9 or step S10, the controller 100 sets the current value $A_n$ of the command current value to a value that is obtained by subtracting the pressure reduction amount D from the previous value $A_{n-1}$ of the command current value (S11). After step S11, the controller 100 determines whether the operation angle θ continuously increases for the second predetermined time T2 (S12).

When it is determined in step S12 that the operation angle θ does not continuously increase for the second predetermined time T2 (No), the controller 100 determines whether the operation angle $\theta$ is equal to or less than the second predetermined value $\theta$th2 (S13). When it is determined in step S13 that $\theta \le \theta$th2 is not satisfied (No), the controller 100 returns to the processing of step S11.

When it is determined in step S13 that $\theta \le \theta$th2 (Yes), the controller 100 removes the release flag F, that is, sets F = 0 (S14). After step S14, the controller 100 sets the command current value $A_n$ to 0 (S15), and ends the processing.

When it is determined in step S12 that the operation angle $\theta$ continuously increases for the second predetermined time T2 (Yes), the controller 100 sets the release flag F to 0 (S16) and returns to the processing of step S3. That is, when the operation angle $\theta$ continuously increases for the second predetermined time T2 during the pressure reduction control, the controller 100 ends the pressure reduction control and resumes the pressure increase control.

Next, a specific example of the operation of the controller 100 will be described in detail.

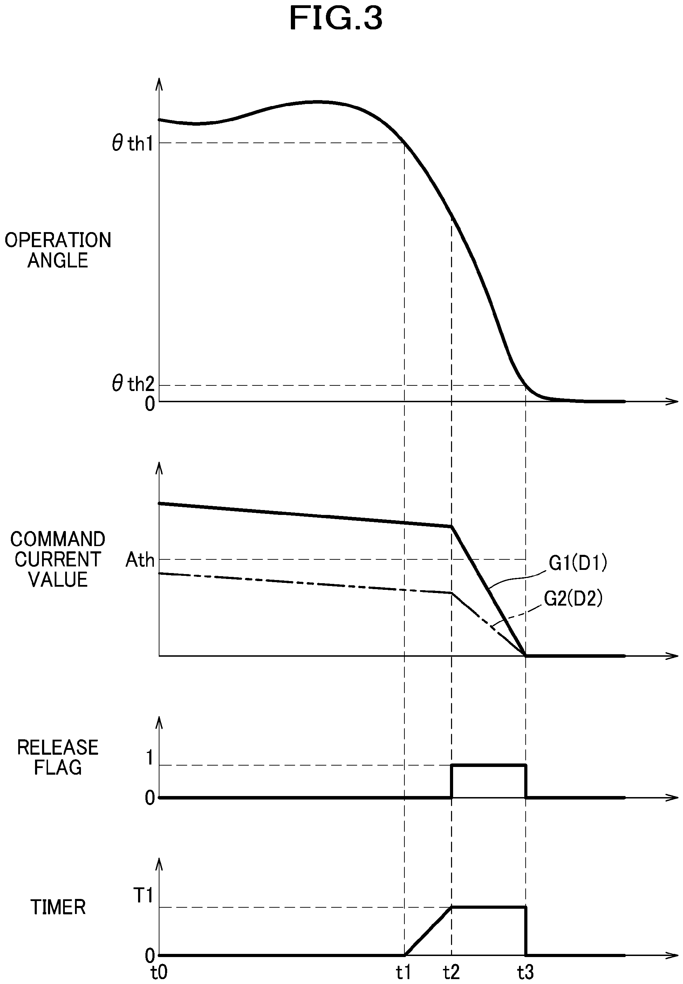

For example, when the rider operates the rear brake lever LR during traveling of the motorcycle MC, as illustrated in FIG. 3, the controller 100 sets the command current value $A_n$ mainly based on the operation angle $\theta$ and the vehicle body deceleration to execute the pressure increase control (time-point t0 to time-point t1). When the operation angle $\theta$ is equal to or less than the first predetermined value $\theta$th1 as a result of the rider loosening the operation on the rear brake lever LR during the pressure increase control, the controller 100 starts the time measurement by the timer and starts the release determination (time-point t1).

When the operation angle $\theta$ continuously decreases during the first predetermined time T1 from the start of the release determination, the controller 100 determines that the operation on the rear brake lever LR is loosened, sets the release flag F, and starts the pressure reduction control (time-point t2). When the command current value $A_n$ at the time-point t2 is equal to or greater than the threshold Ath, the controller 100 reduces the command current value $A_n$ by the first pressure reduction amount D1 as indicated by a solid line. Accordingly, since the command current value $A_n$ gradually decreases at a first gradient G1 corresponding to the first pressure reduction amount D1, the hydraulic pressure of the front brake 20F can be gradually reduced at a first hydraulic pressure gradient corresponding to the first gradient G1.

When the command current value $A_n$ at the time-point t2 is less than the threshold Ath, the controller 100 reduces the command current value $A_n$ by the second pressure reduction amount D2 smaller than the first pressure reduction amount D1, as indicated by a two-dot chain line. Accordingly, since the command current value $A_n$ gradually decreases at a second gradient G2 that is gentler than the first gradient G1, the hydraulic pressure of the front brake 20F can be gradually reduced at a gentler second hydraulic pressure gradient corresponding to the second gradient G2.

Thereafter, when the operation angle $\theta$ is equal to or less than the second predetermined value $\theta$th2 (time-point t3), the controller 100 removes the release flag F, ends the pressure reduction control, and ends the braking force control. Here, in the drawing, for the sake of convenience, the command current value $A_n$ to be reduced at the first gradient G1 or the second gradient G2 is shown to be exactly 0 at the end of the braking force control, and depending on the value of the command current value $A_n$ at the time of the release determination, the command current value $A_n$ is 0 before the end of the braking force control or the command current value $A_n$ is a value larger than 0 at the end of the braking force control. When the command current value $A_n$ is larger than 0 at the end of the braking force control, the command current value $A_n$ is set to 0 in step S15 described above.

As described above, the following effects can be obtained according to the embodiment.

Since the braking force of the front brake 20F is gradually reduced when the rear brake lever LR is loosened, it is possible to reduce the feeling of discomfort brought to the rider when the rear brake lever LR is released.

Since the pressure reduction control is executed with the pressure reduction amount D corresponding to the value of the command current value $A_n$ adopted when the rear brake lever LR is loosened, an operation feeling can be improved.

Even when the rear brake lever LR is re-input during the pressure reduction control and the pressure increase control is resumed, a sudden increase in the braking force of the front brake 20F during the pressure increase control is restricted by the processing of step S4, and thus a vehicle body behavior can be stabilized.

Since the release determination is performed based on the operation amount of the rear brake lever LR, the release determination of the rear brake lever LR can be performed favorably even in a vehicle brake control device C that does not include a pressure sensor.

Since it is determined in the release determination whether the operation angle $\theta$ continuously decreases for the first predetermined time T1, the determination accuracy of the release determination can be improved.

Since the release flag F is removed when the operation angle $\theta$ is equal to or less than the second predetermined value $\theta$th2 smaller than the first predetermined value $\theta$th1, the pressure reduction control performed with the release flag F being set can be ended at an appropriate timing.

Since the release flag F is removed when the operation angle $\theta$ increases with the release flag F being set, the pressure reduction control performed with the release flag F being set can be ended with the re-input of the rear brake lever LR as a trigger.

Since the determination as to the re-input of the rear brake lever LR is performed based on a fact that the operation angle $\theta$ continuously increases for the second predetermined time T2, the determination accuracy of the determination as to the re-input of the rear brake lever LR can be improved.

Since the release determination is performed using the angle sensor 53, it is possible to provide an inexpensive vehicle brake control device C.

The invention is not limited to the above-described embodiment, and can be used in various forms as exemplified below. In the following description, members having substantially the same structures as those of the above-described embodiment are denoted by the same reference signs, and a description thereof is omitted.

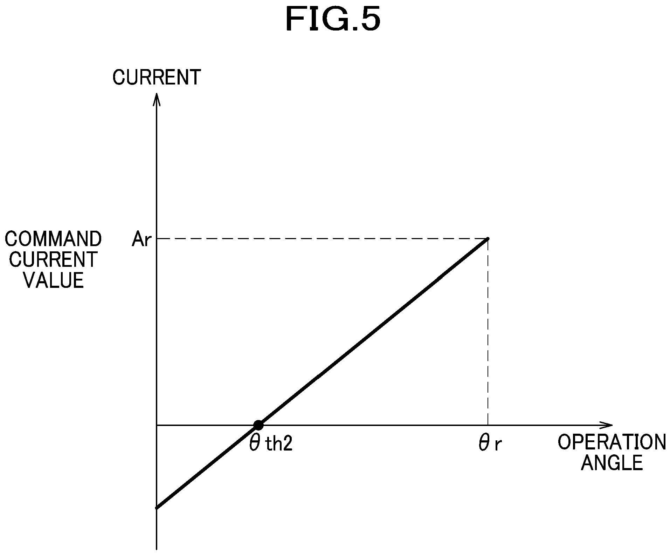

A method of gradually reducing the command current value in the pressure reduction control is not limited to the method described in the above-described embodiment. For example, as illustrated in FIG. 5, based on a command current value Ar and an operation angle $\theta r$ occurring when it is determined that the rear brake lever LR is loosened, the controller 100 may gradually reduce the command current value $A_n$ in accordance with a decrease in the operation angle $\theta$ such that the command current value $A_n$ is 0 when the operation angle $\theta$ of the rear brake lever LR is the second predetermined value $\theta th2$.

Specifically, the command current value $A_n$ during the pressure reduction control may be calculated by the following equation (2).

$$A_n = a(\theta - \theta th2) \quad (2)$$

$$a = Ar/(\theta r - \theta th2)$$

Ar: a command current value at the time of release determination
$\theta r$: an operation angle at the time of release determination

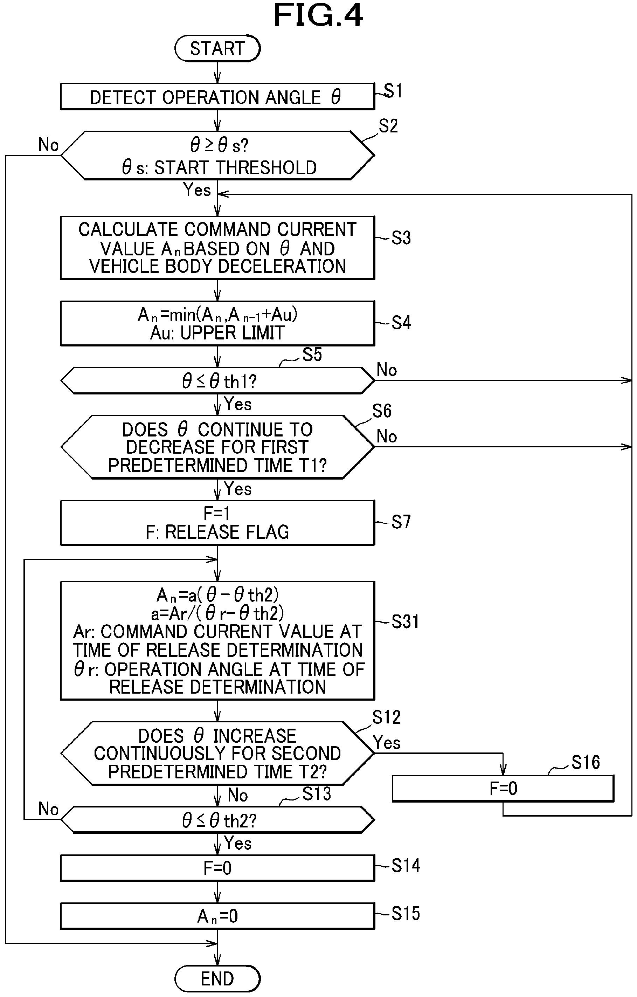

By calculating the command current value $A_n$ by the equation (2), the command current value $A_n$ gradually decreases at the above-described gradient a in accordance with a decrease in the operation angle $\theta$, and the command current value $A_n$ can be set to 0 when the operation angle $\theta$ is the second predetermined value $\theta th2$. It is sufficient that the controller 100 in this case executes the processing shown in FIG. 4.

The processing shown in FIG. 4 has a configuration in which a new step S31 is added instead of steps S8 to S11 in the processing shown in FIG. 2. In step S31, the command current value $A_n$ is set according to the above-described equation (2). After step S7, the controller 100 executes the processing of step S31, and then proceeds to the processing of step S12. When it is determined to be No in step S13, the controller 100 returns to the processing of step S31.

According to this configuration, it is possible to further restrict the command current value $A_n$ from suddenly becoming 0 when the operation angle $\theta$ is the second predetermined value $\theta th2$, that is, when the braking force control is ended, and thus it is possible to further reduce the feeling of discomfort brought to the rider.

Although the upper limit Au for limiting the increase in the braking force of the front brake 20F is set to a fixed value in the above-described embodiment, the upper limit Au may be variable. For example, an upper limit Au1 during the initial pressure increase control in the braking force control and an upper limit Au2 during the pressure increase control when the pressure increase control is resumed from the pressure reduction control may be set to different values. For example, Au2 < Au1 may be satisfied or Au2 > Au1 may be satisfied.

Although it is determined in the release determination that the release is performed when the operation angle $\theta$ continuously decreases during the first predetermined time T1 in the above-described embodiment, for example, it may be also determined that the release is performed when the operation angle $\theta$ intermittently decreases during the first predetermined time T1. As a method of determining whether the operation angle $\theta$ intermittently decreases, for example, a method of determining that the operation angle $\theta$ intermittently decreases when, among a plurality of control loops, the number of control loops in which the current value of the operation angle $\theta$ is smaller than the previous value is larger than the number of control loops in which the current value of the operation angle $\theta$ is larger than the previous value may be exemplified. The determination as to whether the operation angle $\theta$ continuously increases may also be changed to a method of determining whether the operation angle $\theta$ intermittently increases. The determination as to whether the operation angle $\theta$ intermittently increases can be made by the same method as the above-described method of determining whether the operation angle $\theta$ intermittently decreases.

Although the operation angle $\theta$ of the rear brake lever LR is exemplified as the operation amount in the above-described embodiment, the operation amount may be, for example, a stroke amount detected by a stroke sensor configured to detect a stroke of an operating member such as a brake lever or a foot brake, or may be a distance detected by a distance sensor such as an infrared ray sensor configured to detect a distance between an operating member and a support member movably supporting the operating member.

The first brake is not limited to a hydraulic brake, and may be, for example, an electromagnetic brake. The second brake is not limited to a mechanical brake, and may be, for example, an electromagnetic brake or a hydraulic brake. The first brake may be a rear wheel brake, and the second brake may be a front wheel brake.

The vehicle provided with the first brake and the second brake is not limited to the motorcycle MC, and may be any vehicle. For example, the vehicle may be a bar handle vehicle operated by a bar handle. The bar handle vehicle may be, for example, a three-wheeled vehicle or a four-wheeled vehicle.

The brake operating member is not limited to a lever, and may be, for example, a foot brake pedal.

The suction valve may be a normally closed solenoid valve.

The elements described in the above-described embodiment and the modification may be combined as desired.

**Claims**

1. A vehicle brake control device comprising:

   a first brake operating member connected to a first brake;
   a second brake configured not to be operated by the first brake operating member;
   a second brake operating member connected to the second brake; and
   a controller configured to execute braking force control of controlling a braking force of the first brake based on an operation on the second brake operating member, wherein
   in the braking force control, the controller executes

   pressure increase control of controlling the braking force of the first brake based on an operation on the second brake operating member,
   release determination of determining whether the second brake operating member is loosened during the pressure increase control, and
   pressure reduction control of gradually reducing the braking force of the first brake when it is determined in the release determination that the second brake operating member is loosened.

2. The vehicle brake control device according to claim 1, further comprising:

   a hydraulic pressure unit configured to generate the braking force of the first brake by applying a hydraulic pressure to the first brake, the hydraulic pressure unit including a pressure regulator configured to change the hydraulic pressure to be applied to the first brake according to a command current value, wherein
   the controller executes the pressure reduction control by controlling the pressure regulator.

3. The vehicle brake control device according to claim 2, wherein
the controller

   executes the pressure increase control by controlling the pressure regulator,
   sets a first pressure reduction amount in a case where a command current value for the pressure regulator adopted when it is determined that the second brake operating member is loosened is equal to or greater than a threshold, and
   sets, as a current value of the command current value, a value obtained by subtracting the first pressure reduction amount from a previous value of the command current value during the pressure reduction control.

4. The vehicle brake control device according to claim 3, wherein
the controller

   sets a second pressure reduction amount smaller than the first pressure reduction amount in a case where the command current value for the pressure regulator adopted when it is determined that the second brake operating member is loosened is less than the threshold, and
   sets, as the current value of the command current value, a value obtained by subtracting the second pressure reduction amount from the previous value of the command current value during the pressure reduction control.

5. The vehicle brake control device according to claim 2, wherein
the controller

   executes the pressure increase control by controlling the pressure regulator,
   is configured to end the braking force control when an operation amount of the second brake operating member is equal to or less than a predetermined value during execution of the braking force control, and
   based on the command current value and the operation amount occurring when it is determined that the second brake operating member is loosened, gradually reduces the command current value according to a decrease in the operation amount such that the command current value is 0 when the operation amount of the second brake operating member is the predetermined value.

6. The vehicle brake control device according to any one of claims 1 to 5, wherein
when an operation amount of the second brake operating member is increased during the pressure reduction control, the controller resumes the pressure increase control, and limits an increase in the braking force such that an amount of increase in the braking force per unit time is equal to or less than an upper limit.

7. A brake control method to be executed by a vehicle brake control device,

the vehicle brake control device including

a first brake operating member connected to a first brake,
a second brake configured not to be operated by the first brake operating member,
a second brake operating member connected to the second brake, and
a controller configured to execute braking force control of controlling a braking force of the first brake based on an operation on the second brake operating member,

the method comprising causing the controller to execute:

a pressure increase step of controlling the braking force of the first brake based on the operation on the second brake operating member;
a release determination step of determining whether the second brake operating member is loosened during the pressure increase step; and
a pressure reduction step of gradually reducing the braking force of the first brake when it is determined in the release determination step that the second brake operating member is loosened.

# FIG.1

# FIG.2

START

DETECT OPERATION ANGLE $\theta$ — S1

$\theta \geq \theta s$?
$\theta s$: START THRESHOLD — S2 — No

Yes

CALCULATE COMMAND CURRENT VALUE $A_n$ BASED ON $\theta$ AND VEHICLE BODY DECELERATION — S3

$A_n = \min(A_n, A_{n-1} + Au)$
Au: UPPER LIMIT — S4

$\theta \leq \theta th1$? — S5 — No

Yes

DOES $\theta$ CONTINUE TO DECREASE FOR FIRST PREDETERMINED TIME T1? — S6 — No

Yes

F=1
F: RELEASE FLAG — S7

$A_n \geq Ath$?
$A_n$: COMMAND CURRENT VALUE
Ath: THRESHOLD — S8 — No

Yes — S9

| D=D1 D: PRESSURE REDUCTION AMOUNT D1: FIRST PRESSURE REDUCTION AMOUNT | D=D2 D2: SECOND PRESSURE REDUCTION AMOUNT (D2<D1) — S10 |

$A_n = A_{n-1} - D$ — S11

DOES $\theta$ INCREASE CONTINUOUSLY FOR SECOND PREDETERMINED TIME T2? — S12 — Yes

F=0 — S16

No — S13

$\theta \leq \theta th2$? — No

Yes

F=0 — S14

$A_n = 0$ — S15

END

# FIG.3

# FIG.4

START

DETECT OPERATION ANGLE $\theta$ —S1

$\theta \geq \theta s$?
$\theta s$: START THRESHOLD —S2
No — Yes

CALCULATE COMMAND CURRENT
VALUE $A_n$ BASED ON $\theta$ AND
VEHICLE BODY DECELERATION —S3

$A_n = \min(A_n, A_{n-1} + Au)$
Au: UPPER LIMIT —S4

$\theta \leq \theta th1$? —S5
No

Yes

DOES $\theta$ CONTINUE TO
DECREASE FOR FIRST
PREDETERMINED TIME T1? —S6
No

Yes

$F = 1$
F: RELEASE FLAG —S7

$A_n = a(\theta - \theta th2)$
$a = Ar / (\theta r - \theta th2)$
Ar: COMMAND CURRENT VALUE AT
TIME OF RELEASE DETERMINATION
$\theta r$: OPERATION ANGLE AT TIME OF
RELEASE DETERMINATION —S31

DOES $\theta$ INCREASE
CONTINUOUSLY FOR SECOND
PREDETERMINED TIME T2? —S12
Yes

$F = 0$ —S16

$\theta \leq \theta th2$? —S13
No

Yes

$F = 0$ —S14

$A_n = 0$ —S15

END

# FIG.5

# INTERNATIONAL SEARCH REPORT

| International application No. |
| --- |
| **PCT/JP2023/022204** |

## A. CLASSIFICATION OF SUBJECT MATTER

**B62L 3/08**(2006.01)i; **B60T 8/00**(2006.01)i; **B60T 8/26**(2006.01)i
FI: B60T8/00 Z; B62L3/08; B60T8/26 K

According to International Patent Classification (IPC) or to both national classification and IPC

## B. FIELDS SEARCHED

Minimum documentation searched (classification system followed by classification symbols)

B62L3/08; B60T8/00; B60T8/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| X | JP 2006-312372 A (NISSIN KOGYO CO., LTD.) 16 November 2006 (2006-11-16) paragraphs [0028], [0032]-[0033], fig. 1-3 | 1-2, 7 |
| A | paragraphs [0028], [0032]-[0033], fig. 1-3 | 3-6 |
| A | JP 2020-001448 A (NISSIN KOGYO CO., LTD.) 09 January 2020 (2020-01-09) paragraphs [0055]-[0057], fig. 5 | 1-7 |
| A | JP 2005-212680 A (HONDA MOTOR CO., LTD.) 11 August 2005 (2005-08-11) paragraphs [0075]-[0079], fig. 13 | 1-7 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2023** | **25 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/022204**

| Patent document cited in search report | | | Publication date (day/month/year) | Patent family member(s) | | Publication date (day/month/year) |
|---|---|---|---|---|---|---|
| JP | 2006-312372 | A | 16 November 2006 | US 2006/0250022 A1 paragraphs [0043], [0048]-[0049], fig. 1-3 EP 1721797 A2 CN 1891546 A | | |
| JP | 2020-001448 | A | 09 January 2020 | (Family: none) | | |
| JP | 2005-212680 | A | 11 August 2005 | US 2005/0168059 A1 paragraphs [0108]-[0111], fig. 13 DE 102005003255 A1 | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020026678 A